# EUROPÄISCHE PATENTSCHRIFT

(11) **EP 1 886 049 B1**
(45) Veröffentlichungstag und Bekanntmachung des Hinweises auf die Patenterteilung: **22.12.2010**
(21) Anmeldenummer: 06763206.7
(22) Anmeldetag: 22.05.2006
(51) Int. Cl.: F16J 15/32

(54) **TEMPORÄRE BESCHICHTUNG FÜR EINE LIPPENDICHTUNG (-FETT)**
TEMPORARY COATING FOR A LIP SEAL (FAT)
REVETEMENT TEMPORAIRE (GRAISSE) POUR UN JOINT A LEVRE

(30) Priorität: 28.05.2005 DE 102005024530
(43) Veröffentlichungstag der Anmeldung: 13.02.2008
(73) Patentinhaber: AB SKF, 415 50 Göteborg (SE)
(72) Erfinder: IRMEN, Wolfgang, 40764 Langenfeld (DE)
(74) Vertreter: von Kreisler Selting Werner
(86) Internationale Anmeldenummer: PCT/EP2006/062475
(87) Internationale Veröffentlichungsnummer: WO 2006/128798

(56) Entgegenhaltungen:
- EP-A- 1 267 106
- DE-A1- 1 750 230
- DE-A1- 19 532 701
- US-A1- 2005 098 959

## Beschreibung

Die Erfindung betrifft eine Lippendichtung für ein relativ bewegbares Maschinenteil, umfassend eine flexible Dichtlippe, die das Maschinenteil im Bereich eines Dichtspalts unter einer elastischen Vorspannung anliegend umschließt, wobei der Dichtspalt an zumindest einer Umfangsstelle von einer Drallstufe in Längsrichtung durchdrungen ist, wobei die Drallstufe durch eine spiralförmige Nut in der Dichtlippe und die der Nut zugewandte abzudichtende Oberfläche des Maschinenteils begrenzt ist und wobei die Nut den abzudichtenden Maschineninnenraum mit der Umgebung verbindet.

Lippendichtungen finden vor allem in Form von Lippendichtringen Einsatz. Eine solche Lippendichtung ist aus der DE 195 32 701 A1 bekannt. Der Dichtspalt ist zumindest im Bereich der die Drallstufe begrenzenden Nut durch ein Wachs als abdichtendes Material verschlossen. Das Wachs innerhalb des Dichtspalts ist vorgesehen um überprüfen zu können, ob die Lippendichtung falsch eingebaut beziehungsweise beschädigt ist. Ist die Lippendichtung beispielsweise falsch eingebaut oder beschädigt, wird bei einer Druckprüfung kein zufriedenstellendes Abdichtungsergebnis erzielt. Für die Druckprüfung wird der abzudichtende Raum im Anschluss an die Montage der Lippendichtung mit Gas eines vorgegebenen Prüfdrucks beaufschlagt und der Druckabfall während einer bestimmten Prüfzeit registriert. Bleibt der Druck innerhalb der Prüfzeit weitgehend konstant, ist das ein Zeichen dafür, dass die Dichtlippe korrekt eingebaut und unbeschädigt ist. Ergibt sich demgegenüber ein schneller Druckabfall, ist die Dichtlippe entweder fehlerhaft montiert beziehungsweise beschädigt. Wurde die Druckprüfung zufriedenstellend absolviert, wird das Wachs während der bestimmungsgemäßen Verwendung der Lippendichtung betriebsbedingt erwärmt und vollständig aus dem Dichtspalt in Richtung des abzudichtenden Raums gefördert. Nachteilig ist es hierbei, dass Wachs bei niedrigen Temperaturen leicht spröde wird und so keine Dichtungswirkung zeigen kann und darüber hinaus bei zu hohen Temperaturen leicht oberhalb von Raumtemperatur bereits schmilzt.

EP 1 217 269 A2 beschreibt eine ähnliche Lippendichtung, bei der das abdichtende Material thixotrop ist. Nachteilig ist es hierbei, dass durch die Thixotropie das Material in der Zeit zwischen Herstellung der Maschine mit der Lippendichtung und der Druckprüfung durch mechanischen Einfluss flüssig werden kann und somit aus dem Dichtspalt hinausfließen kann. Weiterhin ist es nachteilig, dass das Material während der Druckprüfung selbst keinerlei mechanischen Einfluss erfährt und durch die Thixotropie fester ist und somit eine schlechtere Dichtungswirkung hat.

EP 1 267 106 A2 beschreibt ebenfalls eine ähnliche Lippendichtung, bei der das abdichtende Material während der gesamten Gebrauchsdauer der Lippendichtung an dieser anhaftet und insbesondere ein Öl ist. Hierbei wird jedoch die spiralförmige Nut teilweise mit dem Dichtungsmaterial zugesetzt und kann die eigentliche Aufgabe nicht mehr mit voller Effizienz erfüllen, nämlich das aus der Maschine durch den Dichtspalt quellende Schmiermittel wieder zurück in den Maschineninnenraum zu transportieren. Bei einer Dichtung mit Öl wird diese Schmierung meistens dadurch bewerkstelligt, dass entweder die Bohrung mit einem Pinsel mit Öl eingestrichen wird oder die Dichtungslippe vorab in Öl getaucht wird. Dies kann jedoch in irreparabler Weise zu einer schlechten Montage der Dichtlippe führen, insbesondere bei horizontaler Montierung der Dichtung, da hier das Öl die Tendenz hat, in den tiefliegenden Teil herunterzufließen, was wiederum in einer unvollständigen und ungleichmäßigen Schmierung und Dichtung resultiert. Dadurch kann es zu einer schiefen oder unvollständigen Montage oder sogar zu einem teilweisen oder vollständigen Herausreißen der Elastomerteile der Lippendichtung bei Kontakt mit der Bohrung kommen.

Der Erfindung liegt also die Aufgabe zugrunde, eine Lippendichtung bereitzustellen, die den Dichtspalt bei einer Druckprüfung temporär zuverlässig verschließt, wobei zusätzlich die vorgenannten Probleme behoben werden.

In einer ersten Ausführungsform wird die der Erfindung zu Grunde liegende Aufgabe gelöst durch eine Lippendichtung für ein relativ bewegbares Maschinenteil, umfassend eine flexible Dichtlippe, bevorzugt aus polymerem Werkstoff, die das Maschinenteil im Bereich eines Dichtspalts unter einer elastischen Vorspannung anliegend umschließt, wobei der Dichtspalt an zumindest einer Umfangsstelle von einer Drallstufe in Längsrichtung durchdrungen ist, wobei die Drallstufe durch eine spiralförmige Nut in der Dichtlippe und die der Nut zugewandte abzudichtende Oberfläche des Maschinenteils begrenzt ist und wobei die Nut den abzudichtenden Raum mit der Umgebung verbindet, dadurch gekennzeichnet, dass der Dichtspalt im Bereich der die Drallstufe begrenzenden Nut durch ein Dichtungsmaterial bei dem die Viskosität bei Einwirkung mechanisher Kräfte, insbesondere in Form von Schubspannung oder Scherspannung, konstant bleibt oder zunimmt, das Dichtungsmaterial insbesondere rheopex, keinesfalls uber thioxotrop ist, nur zur

Durchführung einer Druckprüfung verschlossen ist, wobei das Dichtungsmaterial
a) eine Oberflächenbeschichtung bildet, die im Vergleich zur Gebrauchsdauer der Lippendichtung nur zur Druckprüfung an der der Nut zugewandten Oberfläche der Dichtlippe anhaftet, und
b) ein Fett ist.

Fett im Sinne der Erfindung ist im Unterschied zu Öl nicht fließfähig bei 25°C. Fett im Sinne der Erfindung kann außerdem zwei unterschiedlichen Klassen zugeordnet werden:
1) Zum einen kann ein Fett im Sinne der Erfindung einer ersten Kategorie angehören, die aus einem Mono-, Di- und/oder Tri-Ester des Glycerins mit höheren Fettsäuren gebildet wird. Vorteilhafterweise weisen diese Fettsäuren 8 bis 25 Kohlenstoffatome, besonders bevorzugt 10 bis 21 Kohlenstoffatome auf, da bei zu kurzen Fettsäuren die resultierenden Fette zu niedrigviskos sind und bei zu langkettigen Fettsäuren die resultierenden Fette zu hochviskos beziehungsweise spröde sind. Die Fettsäuren sind vorzugsweise mindestens einfach, besonders bevorzugt mehrfach ungesättigt. Es ist bevorzugt, wenn es sich um einen Triester des Glycerins handelt, insbesondere wenn nicht alle Fettsäuren des Triesters identisch sind. Dadurch sind die erfindungsgemäßen Fette empfindlicher für Autooxidation, was ein erfindungsgemäß erwünschter Abbaumechanismus für die Fette ist.
2) Zum anderen kann ein Fett im Sinne der Erfindung einer zweiten Kategorie angehören, bei der das Fett ein Mineralfett auf Basis eines hochraffinierten Mineralöls ist. Mineralöle im Sinne der vorliegenden Erfindung umfassen die aus mineralischen Rohstoffen (Erdöl, Braun- und Steinkohlen, Holz, Torf) gewonnenen flüssigen Destillationsprodukte, die im wesentlichen aus Gemischen von gesättigten Kohlenwasserstoffen bestehen. Analog werden die festen und halbfesten Gemische höherer Kohlenwasserstoffe als Mineralfette bezeichnet. Beispiele umfassen Ceresin, Vaseline, und Paraffin.

Die Schichtdicke der Oberflächenbeschichtung liegt vorteilhafterweise in einem Bereich von 20 bis 200 µm. Liegt die Schichtdicke unterhalb dieses Bereiches, so kann das Dichtungsmaterial die Nut nicht mehr wirksam abdichten. Liegt jedoch die Schichtdicke oberhalb dieses Bereiches, so dauert der Austrag des Dichtungsmaterials zu lange und es kommt zu signifikanten Verunreinigungen der Nut beim Abbau des Dichtungsmaterials.

Vorzugsweise beträgt die kinematische Viskosität des Dichtungsmaterials ohne Einwirken mechanischer Kräfte auf das Dichtungsmaterial bei 25 °C mindestens 3,2 m²/h, besonders bevorzugt 3,6 m²/h. Das Dichtungsmaterial ist vorzugsweise den NLGI (National Lubricating Grease Institute) - Klassen 1 bis 2 zuzuordnen. Ganz besonders bevorzugt ist ein Dichtungsmaterial, das bei 25 °C nicht mehr fließfähig ist. Hierdurch wird zum einen ein Herausblasen des Dichtungsmaterials während der Druckprüfung verhindert und zum anderen kann das Dichtungsmaterial durch die relativ hohe Viskosität nicht schon in dem Zeitraum zwischen Herstellung der Maschine mit der Lippendichtung und der tatsächlichen Druckprüfung aus dem Dichtspalt herausfließen und somit der Dichtungswirkung entgegenwirken. Die Viskosität wird nicht mit einem Spindel-Viskosimeter gemessen, um eine mechanische Einwirkung während der Viskositätsmessung weitgehend zu unterbinden. Vielmehr wird die Viskosität bei 25 °C mit einem Kapillarviskosimeter (beispielsweise KV 100 der Firma RheoTec Messtechnik GmbH in Ottendorf-Okrilla) gemessen.

Das Dichtungsmaterial der ersten Kategorie zersetzt sich vorteilhafterweise bei Temperaturen oberhalb von 150°C, insbesondere oberhalb von 100 °C, damit dieses im Betrieb der Maschine möglichst schnell aus der Dichtung ausgetragen wird und somit eine volle Effizienz der spiralförmigen Nut gewährleisten kann.

Das Dichtungsmaterial der zweiten Kategorie wird vorteilhafterweise aufgrund seiner guten Verträglichkeit mit Motorenöl von diesem aufgelöst und ausgetragen. Bei Erwärmung über den Erweichungspunkt (etwa 60 bis 95 °C) verflüssigt sich das Fett vorzugsweise und verfestigt sich vorteilhafterweise bei erneuter Abkühlung nicht mehr. Dieser Effekt begünstigt die Lösung des Fettes im Motorenöl. Vorzugsweise kommen Fette der NLGI (National Lubricating Grease Institute) - Klassen 1 bis 2 zu Einsatz, wobei das Verdickungsmittel vorteilhafterweise eine Calcium-Seife ist. Beispiele für solche Fette sind Renolit^{®} CA-CC 1, Renolit^{®} CA-FN 3, Renocal^{®} FN 745/94, die alle von Fuchs Europe Schmierstoffe GmbH, Mannheim hergestellt werden.

Die Viskosität bleibt bei Einwirkung mechanischer Kräfte, insbesondere in Form von Schubspannung oder Scherspannung, konstant oder nimmt zu, ist also rheopex, keinesfalls jedoch thixotrop. Dies ist oft bei Pasten, vor allem dilatanten Pasten, der Fall. Dadurch dass die Viskosität bei Einwirkung mechanischer Kräfte konstant bleibt oder zunimmt, kann verhindert werden, dass das Dichtungsmaterial in dem Zeitraum zwischen Herstellung der Maschine mit der Lippendichtung und der tatsächlichen Druckprüfung durch mechanische Einflüsse flüssig wird und aus der Lippendichtung auslaufen kann. Weiterhin kann dadurch bei der tatsächlichen Druckprüfung gewährleistet werden, dass das Dichtungsmaterial erst zum Zeitpunkt der Prüfung die niedrigstmögliche Viskosität und damit höchste Dichtwirkung besitzt.

Das Dichtungsmaterial weist vorzugsweise keinen Erweichungspunkt unterhalb 80 °C auf, damit das Dichtungsmaterial vor der tatsächlichen Druckprüfung nicht aus dem Dichtspalt ausgetragen wird. Das Dichtungsmaterial soll nur temporär den Dichtspalt verschließen und anschließend möglichst schnell aus dem Dichtspalt ausgetragen werden.

Vorteilhafterweise weicht die Viskosität des Dichtungsmaterials vor der Verschließung des Dichtspaltes nicht mehr als 10% von der Viskosität des Dichtungsmaterials nach der Druckprüfung ab, damit gewährleistet ist, dass das Dichtungsmaterial mit der Zeit nicht aushärtet und dann aus dem Dichtspalt nur noch schwer entfernbar ist.

Das Dichtungsmaterial weist vorzugsweise einen Stockpunkt nach DIN ISO 3016 von wenigstens 20 °C auf, damit das Dichtungsmaterial vor der tatsächlichen Druckprüfung nicht aus dem Dichtspalt ausgetragen wird oder aus dem Dichtspalt herausfließt.

Das Dichtungsmaterial ist weiterhin vorteilhafterweise ein Fett der ersten Kategorie mit einem Flammpunkt von wenigstens 150 °C, damit es sich nicht zu Kohle zersetzt oder verbrennt. Das Dichtungsmaterial soll vielmehr bei höheren Temperaturen von mindestens 150 °C, bevorzugt mindestens 100 °C, durch Autoxidation in leicht austragbare Stoffe zersetzt werden. Gehört das Fett der zweiten Kategorie an, so wird es vorzugsweise bei diesen Temperaturen besonders leicht vom Motorenöl gelöst und so ausgetragen.

Zu diesem Zweck ist das Dichtungsmaterial vorzugsweise ein Fett, welches Fettsäuren mit mindestens einem Kohlenstoffatom aufweist, das selbst vierbindig ist, aber zwei benachbarte Kohlenstoffatome hat, die eine Doppelbindung aufweisen, da diese Art von Fetten besonders leicht autoxidieren. Durch die zwei zur Methylengruppe benachbarten Doppelbindungen wird diese besonders empfindlich für Autoxidation. So wird ein Fett auf Basis von Linoleinsäure etwa 20fach schneller autoxidiert als ein Fett, das auf Ölsäure basiert.

Das Dichtungsmaterial ist darüber hinaus vorteilhafterweise ein Fett, welches mindestens ein Öl und mindestens einen Verdicker aufweist, wobei der Verdicker besonders bevorzugt ausgewählt ist aus der Gruppe Metallseife, Polyharnstoff und/oder organisches Polymer (beispielsweise PTFE).

Die Metallseife kann vorzugsweise ausgewählt sein aus der Gruppe Aluminiumstearat, Bleistearat, Calciumstearat, Calciumlaurat, Calciumbehenat, Magnesiumstearat, Zinkstearat, Zinklaurat, Zinkoleat, Bariumstearat, Barium-12-oxystearat, Lithiumstearat und/oder Lithium-12-oxystearat.

Das Öl kann vorzugsweise ausgewählt sein aus der Gruppe Esteröl, Mineralöl, pflanzliches, tierisches, synthetisches Öl und/oder Siliconöl.

In einer weiteren Ausführungsform wird die erfindungsgemäße Aufgabe gelöst durch ein Verfahren zur Dichtigkeitsprüfung einer Maschine durch Druckbeaufschlagung des Maschineninnenraums und Beobachtung des anschließenden Druckabfalls, wobei die zur Maschine relativ beweglichen und aus der Maschine herausragenden Teile mit der vorbeschriebenen erfindungsgemäßen Lippendichtung abgedichtet sind.

Das Dichtungsmaterial ist vorteilhafterweise auffällig gefärbt, so dass es sich von der Dichtlippe deutlich unterscheidet. Hierbei ist von Vorteil, dass eine gegebenenfalls optische Kontrolle besonders einfach möglich ist. Es ist leicht zu erkennen, ob die Dichtlippe im Bereich der Drallstufe vollständig und/oder gleichmäßig mit dem Dichtungsmaterial beschichtet ist. Vorzugsweise enthält das Dichtungsmaterial einen Farbstoff mit UV-Indikator, der unter UV-Licht hell aufleuchtet.

Die Dichtlippe kann vorzugsweise aus PTFE bestehen. Unter PTFE werden in diesem Zusammenhang auch PTFE-Compounds verstanden. Für viele Anwendungsfälle haben sich Dichtlippen aus PTFE als vorteilhaft bewährt, da ihre Oberflächen nach einem gewissen, minimalen Anfangsverschleiß glasieren und anschließend während einer sehr langen Gebrauchsdauer gleichbleibend gute Gebrauchseigenschaften aufweisen.

Obwohl aus PTFE bestehende Dichtlippen nur einen geringen Reibungskoeffizienten aufweisen, ist die Oberflächenbeschichtung mit dem Dichtungsmaterial trotzdem sinnvoll, weil dadurch der Reibungskoeffizient noch weiter verringert wird.

Bevorzugt erfolgt das Einbringen des Dichtungsmaterials in die Nut durch Besprühen. Hierbei ist von Vorteil, dass die Beschichtung durch die Teilchen, die den Sprühnebel bilden, eine besonders gleichmäßige Dicke hat. Davon abweichend besteht auch die Möglichkeit, das Dichtungsmaterial auf die dem Maschinenteil zugewandte Oberfläche der Dichtlippe und in die Nut zu streichen.

Im Anschluss an das Aufbringen des Dichtungsmaterials kann die Lippendichtung gelagert, transportiert und eingebaut werden, wobei die Umgebungstemperatur keinen nachteiligen Einfluss auf die Viskosität des Dichtungsmaterials hat.

In einer alternativen Ausführungsform kann sich die Dichtlippe auch zur Luftseite hin erstrecken und also nicht in den Maschinenraum hineinragen. Die Drallstufe ist dabei vorzugsweise jedoch genau gegensätzlich zur ersten Ausführungsform gewunden, damit die Dichtstoffe nach wie vor in Richtung des Maschinenraums ausgetragen werden.

Der Gegenstand der Erfindung wird nachfolgend durch die als Anlage beigefügten Zeichnungen weiter verdeutlicht.

Kurzbeschreibung der Zeichnungen
Fig. 1 einen Lippendichtung der erfindungsgemäßen Art in Draufsicht,
Fig. 2 einen Querschnitt der Lippendichtung gemäss Fig. 1.

### Ausführung der Erfindung

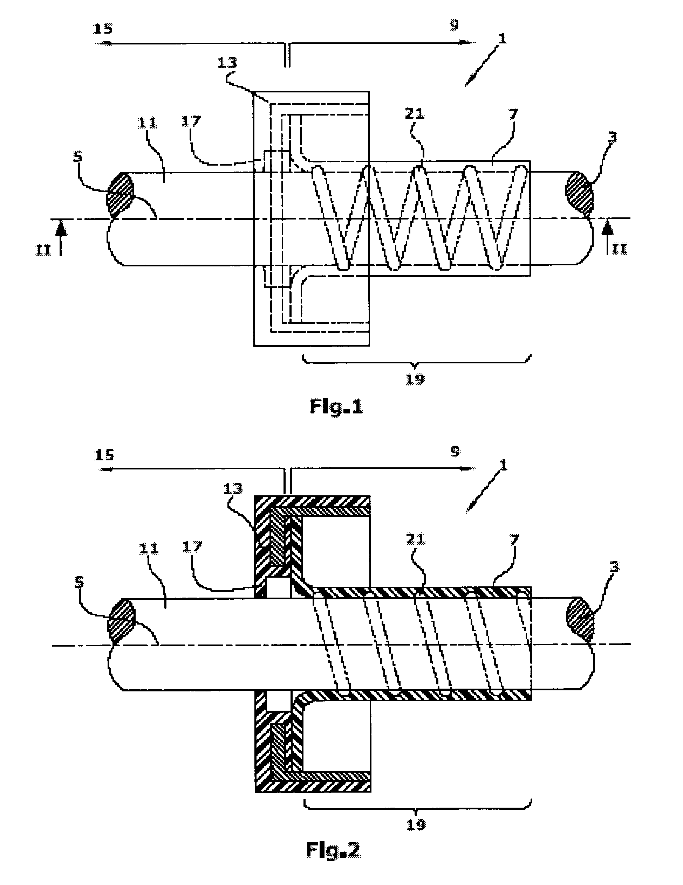

Die in Fig. 1 in der Längsdraufsicht dargestellte Lippendichtung 1 ist für ein relativ bewegbares Maschinenteil 3 bestimmt, beispielsweise für eine um eine Rotationsachse 5 rotierende Welle 3 aus Stahl. Die Lippendichtung 1 umfasst eine flexible Dichtlippe 7, die in diesem Ausführungsbeispiel aus PTFE besteht. In dem hier gezeigten Ausführungsbeispiel ist die Dichtlippe 7 axial in Richtung des abzudichtenden Raums 9 vorgewölbt und umschließt die Oberfläche 11 des Maschinenteils 3 dichtend. Im Bereich des größten Durchmessers der Dichtlippe 7 ist diese an einem Stützring aus Metall befestigt, beispielsweise mittels eines Klebstoffs oder Weichgummis 13.

Die Dichtlippe 7 ist im Bereich des Dichtspalts mit einer die Oberfläche 11 des Maschinenteils 3 vollständig umschließenden spiralförmigen Drallstufe 19 versehen, wobei die Drallstufe 19 durch die spiralförmige Nut 21 und die Oberfläche 11 des Maschinenteils 3 begrenzt ist. Die Drallstufe 19 ist derart ausgeführt, dass sich bei rotierendem Maschinenteil 3 im Bereich der Drallstufe 19 eine Förderwirkung des abzudichtenden Dichtungsmaterials in Richtung des abzudichtenden Raums 9 ergibt.

In diesem Ausführungsbeispiel ist die Dichtlippe 7 mit nur einer einzigen Drallstufe 19 versehen, die das abzudichtende Maschinenteil 3 nach Art einer Spirale auf seinem gesamten Außenumfang umschließt. Zur Verhinderung von Druckverlusten bei einer Druckprüfung durch die die Drallstufe 19 begrenzende Nut 21 ist es daher nicht ausreichend, wenn die Drallstufe 19 an einer einzigen Umfangsstelle durch das Dichtungsmaterial im Dichtspalt zwischen der Oberfläche des Maschinenteils 11 und der Dichtlippe 7 verschlossen ist. Die Menge des Dichtungsmaterials muss so bemessen sein, dass der Dichtspalt durch das Dichtungsmaterial völlig verschlossen ist. Das Dichtungsmaterial kann beispielsweise eine Vaseline-Paste sein. Wird im Anschluss an die Montage der Lippendichtung 1 auf dem Maschinenteil 3 eine Druckprüfung vorgenommen, dann wird die Dichtlippe 7 durch den im abzudichtenden Raum 1 ansteigenden Druck an die Oberfläche 11 des Maschinenteils 3 verstärkt angepresst, was die Abdichtwirkung erhöht. Der Gasdruck bleibt bei unbeschädigtem und korrekt montiertem Lippendichtung während der Druckprüfung weitgehend konstant erhalten; im Bereich der Drallstufe 19 kann keinerlei Druckgas entweichen.

Demgegenüber käme es zu einem vergleichsweise raschen Druckverlust, wenn die Lippendichtung 1 beschädigt und/oder fehlerhaft eingebaut wäre.

Während des an die Druckprüfung anschließenden Betriebs der Lippendichtung 1 findet eine Relativbewegung zwischen der Dichtlippe 7 und der Oberfläche 11 des relativ rotierenden Maschinenteils 3 statt, wobei durch die Relativbewegung des Maschinenteils 3 Wärme und Vibrationen entstehen. Das den Dichtspalt verschließende Dichtungsmaterial wird dadurch in Richtung des abzudichtenden Raums 9 gefördert. Die Drallstufe 19 kann dadurch anschließend voll dem Zweck gerecht werden, für den sie vorgesehen ist, nämlich die Rückförderung von Leckflüssigkeit in den abzudichtenden Raum 9. Das Dichtungsmaterial mit einem Fett der ersten Kategorie wird anschließend an die Druckprüfung durch Autoxidation im Betrieb des Maschinenteils zersetzt und durch die Schmieröle im Innenraum der Maschine 9 ausgetragen. Gehört das Fett der zweiten Kategorie an, so wird es nach der Druckprüfung vom Schmieröl gelöst und ausgetragen.

## Patentansprüche

1. Lippendichtung (1) für ein relativ bewegbares Maschinenteil (3), umfassend eine flexible Dichtlippe (7), die das Maschinenteil im Bereich eines Dichtspalts unter einer elastischen Vorspannung anliegend umschließt, wobei der Dichtspalt an zumindest einer Umfangsstelle von einer Drallstufe (19) in Längsrichtung durchdrungen ist, wobei die Drallstufe (19) durch eine spiralförmige Nut (21) in der Dichtlippe und die der Nut (21) zugewandte abzudichtende Oberfläche (11) des Maschinenteils (3) begrenzt ist und wobei die Nut (21) den abzudichtenden Raum (9) mit der Umgebung verbindet, **dadurch gekennzeichnet, dass** der Dichtspalt im Bereich der die Drallstufe (19) begrenzenden Nut (21) durch ein Dichtungsmaterial bei dem die Viskosität bei Einwirkung mechanischer Kräfte, insbesondere in Form von Schubspannung oder Scherspannung, konstant bleibt oder zunimmt, das Dichtungsmaterial insbesondere rheopex, keinesfalls aber thixotrop ist, nur zur Durchführung einer Druckprüfung verschlossen ist, wobei das Dichtungsmaterial
a) eine Oberflächenbeschichtung bildet, die im Vergleich zur Gebrauchsdauer der Lippendichtung nur zur Druckprüfung an der der Nut (21) zugewandten Oberfläche der Dichtlippe (7) anhaftet, und
b) ein Fett ist.

2. Lippendichtung nach Anspruch 1, **dadurch gekennzeichnet, dass** die kinematische Viskosität des Dichtungsmaterials ohne Einwirken mechanischer Kräfte auf das Dichtungsmaterial bei 25 °C mindestens 3,2 m²/h, insbesondere 3,6 m²/h beträgt.

3. Lippendichtung nach Anspruch 1, **dadurch gekennzeichnet, dass** sich das Dichtungsmaterial bei Temperaturen oberhalb von 120°C, insbesondere oberhalb von 80 °C zersetzt.

4. Lippendichtung nach Anspruch 1, **dadurch gekennzeichnet, dass** das Dichtungsmaterial keinen Erweichungspunkt unterhalb 80 °C aufweist.

5. Lippendichtung nach Anspruch 1, **dadurch gekennzeichnet, dass** die Viskosität des Dichtungsmaterials vor der Verschließung des Dichtspaltes nicht mehr als 10% von der Viskosität des Dichtungsmaterials nach der Druckprüfung abweicht.

6. Lippendichtung nach Anspruch 1, **dadurch gekennzeichnet, dass** das Dichtungsmaterial einen Stockpunkt nach DIN ISO 3016 von wenigstens 20 °C aufweist.

7. Lippendichtung nach Anspruch 1, **dadurch gekennzeichnet, dass** das Dichtungsmaterial ein Fett ist, welches einen Flammpunkt von wenigstens 150 °C aufweist.

8. Lippendichtung nach Anspruch 1, **dadurch gekennzeichnet, dass** das Dichtungsmaterial ein Fett ist, welches Fettsäuren mit mindestens einem Kohlenstoffatom aufweist, das selbst vierbindig ist, aber zwei benachbarte Kohlenstoffatome hat, die eine Doppelbindung aufweisen.

9. Lippendichtung nach Anspruch 1, **dadurch gekennzeichnet, dass** das Dichtungsmaterial ein Fett ist, welches mindestens ein Öl und mindestens einen Verdicker aufweist, insbesondere wobei der Verdicker ausgewählt ist aus der Gruppe Metallseife, Polyharnstoff und/oder organisches Polymer.

10. Verfahren zur Dichtigkeitsprüfung einer Maschine durch Druckbeaufschlagung des Maschineninnenraums (9) und Beobachtung des anschließenden Druckabfalls, wobei die zur Maschine relativ beweglichen und aus der Maschine herausragenden Teile (3) mit einer Lippendichtung (1) gemäß einem der Ansprüche 1 bis **9** abgedichtet sind.

## Claims

1. Lip seal (1) for a relatively movable machine part (3), comprising a flexible sealing lip (7), which adjacently encloses the machine part in the region of a sealing gap under elastic prestressing, the sealing gap being penetrated in the longitudinal direction at at least one circumferential location by a spiral stage (19), the spiral stage (19) being bounded by a helical groove (21) in the sealing lip and by the surface (11) of the machine part (3) that is to be sealed, facing the groove (21), and the groove (21) connecting the space (9) that is to be sealed to the surroundings, **characterized in that**, just for carrying out a pressure test, the sealing gap is closed in the region of the groove (21) bounding the spiral stage (19) by a sealing material of a viscosity that remains constant or increases under the action of mechanical forces, in particular in the form of shearing stress, and the sealing material is, in particular, rheopectic, but by no means thixotropic, wherein the sealing material
a) forms a surface coating which adheres to the surface of the sealing lip (7) facing the groove (21) only for the pressure testing, as compared with the service life of the lip seal, and
b) is a grease.

2. Lip seal according to Claim 1, **characterized in that** the kinematic viscosity of the sealing material without the action of mechanical forces on the sealing material at 25°C is at least 3.2 m²/h, in particular 3.6 m²/h.

3. Lip seal according to Claim 1, **characterized in that** the sealing material decomposes at temperatures above 120°C, in particular above 80°C.

4. Lip seal according to Claim 1, **characterized in that** the sealing material does not have a softening point below 80°C.

5. Lip seal according to Claim 1, **characterized in that** the viscosity of the sealing material before the closing of the sealing gap deviates by no more than 10% from the viscosity of the sealing material after the pressure testing.

6. Lip seal according to Claim 1, **characterized in that** the sealing material has a pour point to DIN ISO 3016 of at least 20°C.

7. Lip seal according to Claim 1, **characterized in that** the sealing material is a grease which has a flame point of at least 150°C.

8. Lip seal according to Claim 1, **characterized in that** the sealing material is a grease which comprises fatty acids with at least one carbon atom, which itself is tetravalent, but has two neighbouring carbon atoms that have a double bond.

9. Lip seal according to Claim 1, **characterized in that** the sealing material is a grease which comprises at least one oil and at least one thickener, in particular wherein the thickener is
selected from the group comprising metal soap, polyurea and/or organic polymer.

10. Method for the tightness testing of a machine by pressurizing the interior machine space (9) and observing the subsequent pressure drop, the parts (3) that are relatively movable in relation to the machine and protrude from the machine being sealed with a lip seal (1) according to one of Claims 1 to 9.

## Revendications

1. Joint d'étanchéité (1) à lèvre pour pièce mobile (3) d'une machine,
comprenant une lèvre flexible d'étanchéité (7) qui entoure la partie d'un interstice d'étanchéité de la pièce de machine et y repose sous contrainte élastique,
l'interstice d'étanchéité étant traversé en au moins un emplacement périphérique par une torsade (19) qui s'étend dans le sens de la longueur,
la torsade (19) étant délimitée par une rainure (21) en spirale ménagée dans la lèvre d'étanchéité et par la surface (11) à rendre étanche, tournée vers la rainure (21), de la pièce de machine (3),
la rainure (21) reliant à l'environnement l'espace (9) à rendre étanche,
**caractérisée en ce que**
dans la partie de la rainure (21) qui délimite la torsade (19), l'interstice d'étanchéité est fermé, uniquement en vue d'exécuter un essai de pression, par un matériau d'étanchéité dont la viscosité reste constante ou augmente lorsque des forces mécaniques y sont appliquées, en particulier sous la forme d'une contrainte de poussée ou d'une contrainte de cisaillement, le matériau d'étanchéité étant en particulier rhéopexique mais en aucun cas thixotropique et
**en ce que** le matériau d'étanchéité :
a) forme un revêtement de surface qui, par rapport à la durée d'utilisation du joint d'étanchéité à lèvre, adhère à la surface de la lèvre d'étanchéité (7) tournée vers la rainure (21) uniquement en vue de l'essai de pression et
b) est une graisse.

2. Joint d'étanchéité à lèvre selon la revendication 1, **caractérisé en ce que** lorsqu'aucune force mécanique n'agit sur le matériau d'étanchéité, la viscosité cinématique à 25°C du matériau d'étanchéité vaut au moins 3,2 m²/h, et en particulier 3,6 m²/h.

3. Joint d'étanchéité à lèvre selon la revendication 1, **caractérisé en ce que** le matériau d'étanchéité se décompose à des températures supérieures à 120°C et en particulier supérieures à 80°C.

4. Joint d'étanchéité à lèvre selon la revendication 1, **caractérisé en ce que** le matériau d'étanchéité ne présente pas de point d'amollissement inférieur à 80°C.

5. Joint d'étanchéité à lèvre selon la revendication 1, **caractérisé en ce qu'**avant la fermeture de l'interstice d'étanchéité, la viscosité du matériau d'étanchéité ne diffère pas de plus de 10 % de la viscosité du matériau d'étanchéité après l'essai de pression.

6. Joint d'étanchéité à lèvre selon la revendication 1, **caractérisé en ce que** le matériau d'étanchéité présente un point de solidification selon DIN ISO 3016 d'au moins 20°C.

7. Joint d'étanchéité à lèvre selon la revendication 1, **caractérisé en ce que** le matériau d'étanchéité est une graisse dont le point de flamme est d'au moins 150°C.

8. Joint d'étanchéité à lèvre selon la revendication 1, **caractérisé en ce que** le matériau d'étanchéité est une graisse qui présente des acides gras comptant au moins un atome de carbone qui forme quatre liaisons simples mais dont deux atomes de carbone voisins sont dotés d'une double liaison.

9. Joint d'étanchéité à lèvre selon la revendication 1, **caractérisé en ce que** le matériau d'étanchéité est une graisse qui présente au moins une huile et au moins un épaississant, l'épaississant étant en particulier sélectionné dans l'ensemble constitué des savons métalliques, de la polyurée et/ou d'un polymère organique.

10. Procédé de test d'étanchéité d'une machine en plaçant sous pression l'espace intérieur (9) de la machine et en observant la chute de pression qui en résulte, dans lequel les pièces (3) mobiles par rapport à la machine et débordant de la machine sont rendues étanches à l'aide d'un joint d'étanchéité à lèvre (1) selon l'une des revendications 1 à 9.
